# EUROPÄISCHE PATENTANMELDUNG

(11) **EP 1 589 269 A2**
(43) Veröffentlichungstag der Anmeldung: **26.10.2005**
(21) Anmeldenummer: 05103268.8
(22) Anmeldetag: 22.04.2005
(51) Int. Cl.: F16K 27/00, F15B 13/00

(54) **Vorrichtung zur lösbaren Befestigung eines Ventils an einer Grundplatte**

(30) Priorität: 23.04.2004 DE 102004019768
(71) Anmelder: Bosch Rexroth AG, 71701 Schwieberdingen (DE)
(72) Erfinder: Bergmann, Klaus, 70499 Stuttgart (DE)
(74) Vertreter: Kietzmann, Lutz

(57) **Zusammenfassung**

Vorrichtung zur lösbaren Befestigung eines Ventils (1) an einer das Ventil (1) über korrespondierende Kanäle (3) zur Druckmittel- und/oder Ansteuersignalversorgung verbindenden Grundplatte (2), wobei sich entlang einer oberen Längsfläche (6) des Ventils (1) eine Blattfeder (5) erstreckt, die zu beiden Enden mit der Grundplatte (2) in ortsfester Verbindung steht und über einen zentralen Druckbereich (7) zwischen den Enden eine Kraft zum Andrücken des Ventils (1) an die Grundplatte (2) ausübt, so dass die miteinander korrespondierenden Kanäle (3) zwischen Ventil (1) und Grundplatte (2) druckdicht miteinander in Verbindung sind.

## Beschreibung

Die Erfindung betrifft eine Vorrichtung zur lösbaren Befestigung eines Ventils an einer das Ventil über korrespondierende Kanäle zur Druckmittel- und/oder Ansteuersignalversorgung verbindenden Grundplatte.

Insbesondere auf dem technischen Gebiet der Pneumatik werden Ventile verwendet, welche zwecks Anschluss an eine Druckluftversorgung und -entsorgung einer entsprechende Anschlüsse aufweisenden Grundplatte zugeordnet sind. Die Grundplatte kann in speziellen Einsatzfällen daneben auch elektrische Leitungsmittel beherbergen, welche dem elektrischen Anschluss der Ventile zur Übertragung der Ansteuersignale an einen elektromagnetischen Antrieb dienen. Gewöhnlich werden mehrere Ventil-Grundplatten-Paarungen zu einem Ventilblock aneinandergereiht. Der Ventilblock stellt somit eine örtlich zusammengefasste Konzentration mehrerer Ventile zur Beaufschlagung nachgeordneter Druckmittelaggregate - wie beispielsweise Druckmittelzylinder - dar.

Aus dem Produktkatalog "Das Pneumatik-Programm von Bosch" (Ausgabe 15.31, Drucknummer 1 987 765 015, Auflage 1998.02, Datenblatt 15.31/5.111) geht ein Ventilblock der vorstehend erläuterten Art hervor. Konkret werden hier mehrere elektrisch betätigbare Wegeventilen mit jeweils zugeordneten Grundplatten zu dem Ventilblock zusammengefasst. Die einzelnen Ventil-Grundplatten-Paarungen werden über Zuganker-Verschraubungen, welche längst durch alle Grundplatten verlaufen, aneinander befestigt. Die Befestigung jedes Ventils an der zugeordneten Grundplatte erfolgt ebenfalls über eine Schraubverbindung. Hierfür sind je Ventil zwei voneinander beabstandete Schrauben vorgesehen, welche durch eine Durchgangsbohrung seitens des Ventils hindurch gesteckt werden, um in die korrespondierende Grundplatte eingeschraubt zu werden. Diese Befestigungslösung stellt bei der vorliegenden Ventil-Grundplatten-Paarung die optimale Lösung dar, da eine einfache Montage mit einer zuverlässigen Verbindungstechnik sichergestellt ist. Denn die Grundplatten selbst bestehen hier aus Aluminium, so dass die in die Grundplatte eingebrachten Gewindegrundbohrungen ein sicheres Zusammenwirken mit den Gewindegängen der Schraube gewährleisten.

In jüngster Zeit geht der Trend bei Ventilgehäusen und Grundplatten vermehrt zu Kunststoffausführungen, welche sich fertigungstechnisch recht einfach durch Spritzgießen herstellen lassen. Ein weiterer Trend auf dem technischen Gebiet der Pneumatik geht zu immer schmalbauenderen Ventilen, um die Kompaktheit von hieraus durch Aneinanderreihen aufgebauten Ventilblöcken zu erhöhen. In Folge beider Trends stößt die herkömmliche schraubende Befestigungslösung für Ventile an zugeordnete Grundplatten an Machbarkeitsgrenzen. Denn es steht kaum ausreichend Platz seitens schmaler Grundplatten zur Einbringung einer zuverlässig mit der Schraube zusammenwirkenden Gewindegrundbohrung zur Verfügung. Hierbei sind Mindestmaterialdicken erforderlich, damit die aus Kunststoff bestehenden Gewindegänge den herrschenden Belastungen standhalten. Ferner kann es leicht zu einem Überdrehen der Schrauben beim Einschrauben in die aus Kunststoff bestehende Grundplatte kommen. Die Verwendung von eingespritzten Gewindemetallhülsen zur Herstellung der Gewindegrundbohrung erfordert wiederum angesichts der Schmalbautechnik zu viel Bauraum.

Es ist daher die Aufgabe der vorliegenden Erfindung eine zuverlässige Vorrichtung zur lösbaren Befestigung eines Ventils an einer Grundplatte zu schaffen, die sich insbesondere für schmalbauende Ventile eignet, und die in einfacher Weise die erforderlichen Befestigungskräfte bei der Ventil- Grundplatte- Paarung zur Verfügung stellt.

Die Aufgabe wir ausgehend von einer Vorrichtung gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass sich entlang einer oberen Längsfläche des schmalbauenden Ventils eine Blattfeder erstreckt, die zu beiden Enden mit der Grundplatte in ortsfester Verbindung steht und über einen zentralen Druckbereich zwischen den Enden eine Kraft zum Andrücken des Ventils an die Grundplatte ausübt, so dass miteinander korrespondierenden Kanäle zwischen Ventil und Grundplatte druckdicht miteinander in Verbindung kommen.

Der Vorteil der erfindungsgemäßen Lösung liegt insbesondere darin, dass die dergestalt an der Grundplatte befestigten Ventile in einfacher Weise montierbar und demontierbar sind. Denn die an der Grundplatte angebrachte Blattfeder ist wegen ihrer Anordnung an der oberen Längsfläche des Ventils besonders gut zugänglich. Da keine Befestigungsmittel zwischen dem Ventil und der korrespondierenden Grundplatte vorhanden sind, ist die erfindungsgemäße Lösung für besonders schmalbauende Ventil- Grundplatte- Paarungen geeignet.

Vorzugsweise erfolgt die Befestigung der Blattfeder an der Grundplatte über zwei, je stirnseitig zum Ventil angeordnete und sich zum Bereich der oberen Längsfläche hin erstreckende Halterarme. Die Halterarme können dabei durch Spritzgießen der vorzugsweise aus Kunststoffbestehenden Grundplatte mit angeformt werden, so dass der zusätzliche Herstellungsaufwand recht minimal bleibt. Weiterhin bilden die beiden sich je stirnseitig des Ventils erstreckenden Halterarme eine recht gute Führung für das Ventil, das vorzugsweise hieran direkt zur Anlage kommt.

Die Blattfeder sollte zur Realisierung einer einfachen Montage/Demontage zum einen Ende hin schwenkbar am zugeordneten Halterarm angebracht sein. Somit ist die Montage beziehungsweise Demontage des Ventils mit/von der Grundplatte in einfacher Weise bei weggeschwenkter Blattfeder möglich. Ein weiterer Vorteil dieser Anordnung besteht darin, dass die Blattfeder somit unverlierbar an einem Halterarm der Grundplatte angebracht ist. Die schwenkbare Befestigung der Blattfeder am zugeordneten Halterarm kann in besonders einfacher Weise mittels einer Verstiftung hergestellt werden.

Gemäß einer weiteren die Erfindung verbessernden Maßnahme ist vorgesehen, dass der gegenüberliegende Halterarm an seinem distalen Ende mit einem Halte/Lösemechanismus nach Art eines Federrastmechanismus ausgestattet ist. Hieran ist die Blattfeder ohne zusätzliches Werkzeug arretierbar.

Der besagte Halte/Lösemechanismus besteht vorzugsweise aus zwei entgegen einer Federkraft zusammendrückbaren Hakenschenkeln, die sich im entspannten Zustand hinter einer fensterartigen Öffnung der Blattfeder einhaken. Ein Lösen erfolgt durch Zusammendrücken der beiden Hakenschenkel, so dass diese durch die Öffnung hindurch gelangen und sich die Blattfeder entfernen lässt. Natürlich ist es im Rahmen der vorliegenden Erfindung auch denkbar, beide Halterarme mit einem derartigen Halte/Lösemechanismus auszustatten, was eventuell bei sehr begrenzten Platzverhältnissen von Vorteil sein kann.

Die erfindungsgemäße Blattfeder besteht vorzugsweise aus einem ausgestanzten Federstahlblechstück, welchem zur Erzielung einer ausreichenden Vorspannung eine gewölbte Gestalt verliehen ist. Durch diese spezielle Ausführung der Blattfeder lassen sich genügend große Andrückkräfte für das Ventil in Richtung der Grundplatte aufbringen, um eine druckdichte Verbindung herzustellen. Zusätzlich ist es ratsam, im Kontaktbereich zwischen dem Ventil und der zugeordneten Grundplatte mindestens ein Dichtungselement zur Abdichtung der korrespondierenden Kanäle gegeneinander und gegenüber der Atmosphäre anzuordnen.

Eine andere die Erfmdung verbessernde Maßnahme sieht vor, dass zur eindeutigen Lagebestimmung des Ventils gegenüber der zugeordneten Grundplatte dazwischen angeordnete und formschlüssig ineinandergreifende Mittel vorgesehen sein können. Diese formschlüssig ineinandergreifenden Mittel können beispielsweise in Form von stiftartigen Anformungen seitens der Grundplatte ausgebildet werden, die in korrespondierende Ausnehmungen seitens des Ventils spielfrei eingreifen.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig.1: eine Seitenansicht einer Ventil- Grundplatte- Paarung mit einer Vorrichtung zur lösbaren Befestigung beider Verbindungspartner,
- Fig. 2: eine Draufsicht auf die Ventil-Grundplatten-Paarung gemäß Fig. 1,
- Fig. 3: eine Seitenansicht der Ventil-Grundplatten-Paarung gemäß Fig. 1 im Bereich des Halte/Lösemechanismus.

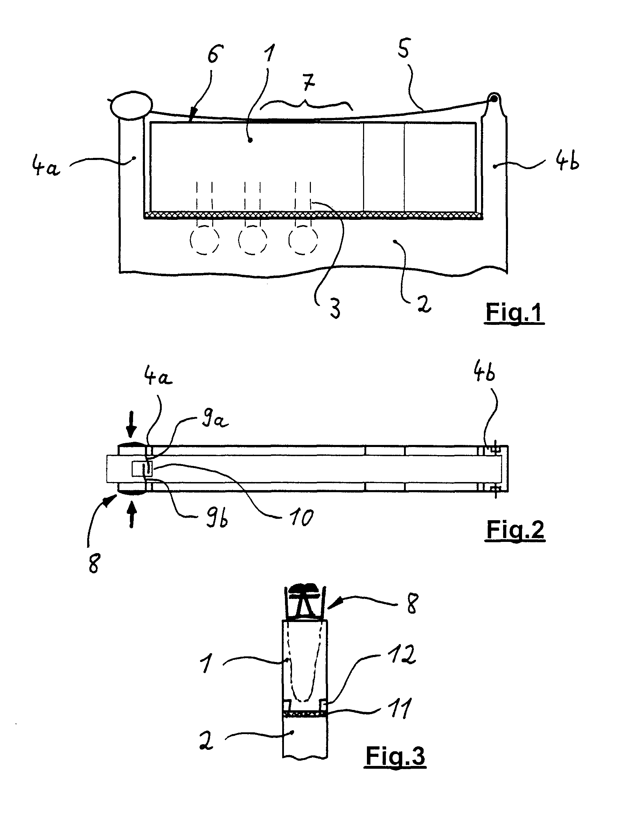

Gemäß Fig. 1 ist ein Ventil 1 mit einer Grundplatte 2 verbunden. Zwischen der Grundplatte 2 und dem Ventil 1 verlaufen - hier durch Strichlinien angedeutet - diverse Kanäle 3 zur Versorgung oder Entsorgung des Ventils 1 mit Speisedruck beziehungsweise Abluft.

Die Grundplatte 2 weist weiterhin zwei beabstandet voneinander angeordnete Halterarme 4a und 4b auf. Beide Halterarme 4a und 4b sind direkt an die aus Kunststoff bestehende Grundplatte 2 angeformt. Zwischen den distalen Enden beider Halterarme 4a und 4b erstreckt sich eine Blattfeder 5 entlang der oberen Längsfläche 6 des Ventils 1. Die Blattfeder 5 ist zu einem Ende hin schwenkbar am zugeordneten Halterarm 4b gelagert, um eine Montage/Demontage des Ventils 1 mit/von der Grundplatte 2 bei weggeschwenkter Blattfeder 5 zu ermöglichen. Die zur Befestigung des Ventils 1 an der Grundplatte erforderliche Druckkraft bringt die Blattfeder 5 über einen zentralen Druckbereich 7 auf. Die Blattfeder 5 besteht insoweit aus einem ausgestanzten Federstahlblechstück, dem zur Erzielung der erforderlichen Vorspannung eine gewölbte Gestalt verliehen ist.

Gemäß Fig. 2 ist die Blattfeder 5 an dem dem Halterarm 4a zugeordneten Ende über einen Halte/Lösemechanismus 8 lösbar hieran angebracht. Der Halte/Lösemechanismus 8 funktioniert nach Art eines Federrastmechanismus. Durch Zusammendrücken (in Pfeilrichtung) zweier Hakenschenkel 9a und 9b werden diese in Übereinstimmung mit einer korrespondierenden Öffnung 10 in der Blattfeder 5 gebracht, so dass die beiden Hakenschenkel 9a und 9b durch die fensterartige Öffnung 10 hindurchgelangen können, um die Blattfeder 5 vom Halterarm 4a zu lösen.

Nach Fig. 3 ist ein flächenübergreifendes Dichtelement 11 zwischen dem Ventil 1 und der Grundplatte 2 zur Abdichtung der - hier nicht weiter dargestellten - korrespondierenden Kanäle gegeneinander und gegenüber der Atmosphäre vorgesehen.

Damit das Ventil 1 im montierten Zustand unverrückbar mit der korrespondierenden Grundplatte 2 in Verbindung bleibt, sind zwischen dem Ventil 1 und der Grundplatte 2 formschlüssig ineinandergreifende Fixiermittel 12 vorgesehen, die hier durch geometrische Anformungen und Ausnehmungen ausgebildet sind.

### Bezugszeichenliste

- **1**: Ventil
- **2**: Grundplatte
- **3**: Kanal
- **4**: Halterarm
- **5**: Blattfeder
- **6**: Längsfläche
- **7**: Druckbereich
- **8**: Halte/Lösemechanismus
- **9**: Halteschenkel
- **10**: Öffnung
- **11**: Dichtungselement
- **12**: Fixiermittel

## Patentansprüche

1. Vorrichtung zur lösbaren Befestigung eines Ventils (1) an einer das Ventil (1) über korrespondierende Kanäle (3) zur Druckmittel- und/oder Ansteuersignalversorgung verbindenden Grundplatte (2),
**dadurch gekennzeichnet, dass** sich entlang einer oberen Längsfläche (6) des Ventils (1) eine Blattfeder (5) erstreckt, die zu beiden Enden mit der Grundplatte (2) in ortsfester Verbindung steht und über einen zentralen Druckbereich (7) zwischen den Enden eine Kraft zum Andrücken des Ventils (1) an die Grundplatte (2) ausübt, so dass die miteinander korrespondierenden Kanäle (3) zwischen Ventil (1) und Grundplatte (2) druckdicht miteinander in Verbindung sind.

2. Vorrichtung nach Anspruch 1,
**dadurch gekennzeichnet, dass** die Befestigung der Blattfeder (5) an der Grundplatte (2) über zwei, je stirnseitig zum Ventil (1) benachbart angeordnete und sich bis zum Bereich der oberen Längsfläche (6) hin erstreckende Haltearme (4a, 4b) erfolgt.

3. Vorrichtung nach Anspruch 1 oder 2,
**dadurch gekennzeichnet, dass** die Blattfeder (5) zu einem Ende hin schwenkbar am zugeordneten Haltearm (4b) angebracht ist, um eine Montage/Demontage des Ventils (1) mit/von der Grundplatte (2) bei weggeschwenkter Blattfeder (5) zu ermöglichen.

4. Vorrichtung nach Anspruch 3,
**dadurch gekennzeichnet, dass** die Blattfeder (5) am anderen Ende mittels eines Halte/Lösemechanismus (8) nach Art eines Federrastmechanismus am zugeordneten Haltearm (4b) lösbar angebracht ist.

5. Vorrichtung nach Anspruch 4,
**dadurch gekennzeichnet, dass** der Halte/Lösemechanismus (8) aus aus zwei entgegen einer Federkraft zusammendrückbaren Hakenschenkeln (9a, 9b) besteht, die sich im entspannten Zustand hinter eine fensterartige Öffnung (10) der Blattfeder (5) einhaken und hiervon im zusammengedrückten Zustand durch die Öffnung (10) hindurch lösbar sind.

6. Vorrichtung nach einem der vorstehenden Ansprüche,
**dadurch gekennzeichnet, dass** die Blattfeder (5) aus einem ausgestanzten Federstahlblechstück besteht, dem zur Erzielung einer Vorspannung eine gewölbte Gestalt verliehen ist.

7. Vorrichtung nach einem der vorstehenden Ansprüche,
**dadurch gekennzeichnet, dass** im Kontaktbereich zwischen dem Ventil (1) und der zugeordneten Grundplatte (2) mindestens ein Dichtungselement (11) zur Abdichtung der korrespondierenden Kanäle (3) gegeneinander und gegenüber der Atmosphäre angeordnet ist.

8. Vorrichtung nach einem der vorstehenden Ansprüche,
**dadurch gekennzeichnet, dass** zur Lagebestimmung des Ventils (1) gegenüber der zugeordneten Grundplatte (2) dazwischen angeordnete und formschlüssig ineinandergreifende Fixiermittel (12) vorgesehen sind.
